# EUROPEAN PATENT APPLICATION

(11) **EP 1 868 332 A1**
(43) Date of publication of application: **19.12.2007**
(21) Application number: 06291009.6
(22) Date of filing: 16.06.2006
(51) Int. Cl.: H04L 12/56

(54) **Management of the quality of service (QoS) in a wireless network**

(71) Applicant: Alcatel Lucent, 75008 Paris (FR)
(72) Inventor: Fiat, Lionel, 92380 Garches (FR)
(74) Representative: Richardt, Markus Albert

(57) **Abstract**

A method of handling Quality-of-Service, QoS, requirements in a wireless network (1), in particular a WiMAX or 3GPP LTE/SAE network. The proposed method comprises sending QoS requirements (A) from a first element (8) of a wireless core network (4) to an element (6) of a wireless access network (3) involved in resource allocation to a user equipment (2) requiring a service with said QoS requirements. The proposed method further comprises:
- sending a registration message (B) from the wireless access network element (6) to a second element (11) of the wireless core network (4) for registrating the user equipment (2);
- including in said registration message (B) at least one parameter indicating an identifier of an entity (7) in the wireless access network element (6) to which the QoS requirements (A) are to be sent.

## Description

### Background of the invention

The present invention relates to a method of handling Quality-of-Service (QoS) requirements in a wireless communication network, e.g. a WiMAX or 3GPP LTE/SAE (3^{rd} Generation Partnership Project Long Term Evolution / System Architecture Evolution) network.

The present invention also relates to an access network element for use in a wireless communication access network, e.g. a WiMAX access network.

Furthermore, the present invention relates to a wireless communication network and to a computer program product for use in handling QoS requirements in such a network.

In wireless communication networks such as WiMAX (Worldwide Interoperability microwave Access) networks a generally mobile end terminal (user equipment, mobile station) is attached to a particular access network via both access network elements generally referred to as Base Station (BS) and as Access Service Network Gateway (ASN-GW) or Wireless Access Controller (WAC). In order to find out whether or not an ASN can provide a particular QoS to a user equipment requiring a particular service, network initiated QoS requests are issued by an element of a WiMAX core network to the WAC in which said user equipment is attached / registered. To this end, the corresponding WAC must be located for correctly addressing said requests. For instance, said network initiated QoS request can be an IP Multimedia Subsystem (IMS) request issued by a Policy Decision Function (PDF) of the WiMAX core network.

In this context, a QoS request comprises sending QoS parameters which specify the Quality-of-Service parameters and are used to differentiate telecommunication services based on measurable parameters evaluated or controlled via network monitoring, e.g. a bit rate, bandwidth, or the like.

Prior art solutions for solving the above-described technical problem of locating an end terminal in terms of a particular WAC consists in defining a new interface between ASN-GW (WAC) and PDF of the WiMAX core network including specific messages for location update of the user equipment. In the present document, the WiMAX core network will alternatively be referred to as Connectivity Service Network (CSN), and accordingly its PDF may be referred to as CSN-PDF. In connection with IMS related service, the CSN may also be referred to as IMS core.

The above-described prior art solution suffers from the inherent disadvantage of requiring a new interface definition while being limited to a functional architecture in which the CSN comprises a PDF while introducing a special mobility dependent feature in the CSN. In other words: the prior art solution is not aligned with implementation strategies focussing on interworking with a legacy IP-CSN, which does not have a PDF for managing mobility features.

### Object of the invention

It is the object of the present invention to provide a method of handling QoS requirements in a wireless communication network which uses standard implementation (e.g., standard WiMAX implementation) without requiring definition of new interfaces and which allows interworking with legacy IP-CSN which do not comprise a PDF for managing mobility features. It is also an object of the present invention to provide a wireless communication network (e.g., a WiMAX network or a 3GPP LTE/SAE network) and an access network element for use in a wireless access network which enable translating the above-defined method into practise, as well as a computer program product.

### Summary of the invention

According to a first aspect of the present invention the object is achieved by providing a method of the above-defined type which comprises sending QoS requirements from a first element of a wireless core network to an element of a wireless access network involved in resource allocation to a user equipment requiring a service with said QoS requirements, further comprising:
- sending a registration message from the access network element to a second element of the core network for registrating the user equipment;
- including in said registration message at least one parameter indicating an identifier of an entity in the access network element to which the QoS requirements are to be sent.

According to a second aspect of the present invention the object is achieved by providing an access network element of the above-defined type, comprising:
- means for receiving corresponding QoS requirements from a first element of a wireless core network;
- means for sending a registration message to a second element of the wireless core network for registrating the user equipment;
- means for including in said registration message at least one parameter indicating an identifier of an entity in the access network element to which the QoS requirements are to be sent.

According to a third aspect of the present invention the object is achieved by providing a wireless communication network, e.g. a WiMAX network, comprising:
- a wireless access network having the access network element according to said second aspect of the present invention, and
- a wireless core network having a first network element for sending QoS requirements to said element of the wireless access network and a second network element for receiving a registration message for registrating the user equipment from said element of the wireless access network, wherein the first network element is adapted for sending said QoS requirements to the entity specified by said parameter.

According to a fourth aspect of the present invention the object is achieved by providing a computer program product of the above-defined type, comprising program code sequences operable to:
- send QoS requirements from a first element of a wireless core network to an element of a wireless access network involved in resource allocation to a user equipment requiring a service with said QoS requirements;
- send a registration message from the access network element to a second element of the wireless core network for registrating the user equipment;
- including in said registration message at least one parameter indicating an identifier of an entity in the access network element to which the QoS requirements are to be sent;
when installed and executed on elements of the wireless network.

In this way, the present invention makes use of the general fact that wireless mobility (mobility of end terminals in an area covered by a wireless communication network, such as a WiMAX or 3GPP LTE/SAE network) is handled by means of mobility registration messages. Thus, by including a field in said registration messages which comprises an identifier of the WAC to which QoS messages have to be sent the above-mentioned technical problem can be solved without relying on a new interface definition and without creating any mobility dependent feature in the wireless CSN / IMS core for QoS management.

Instead of specifying a new interface between WAC and PDF as in the prior art, an embodiment of the present invention further comprises including said identifying parameter in a standard registration message used in the context of wireless mobility to a second element of the wireless core network and internally relaying said parameter from said second element of the wireless core network to the first element of the wireless core network which may then send QoS messages to the QoS managing entity (Service Flow Activation (SFA) entity) of that particular WAC.

In accordance with the present invention said step of relaying the identifying parameter internally within the CSN can either occur directly between the second and the first element of the wireless core network or indirectly through another element of the wireless core network.

Within the context of the present invention, for a WiMAX network the first network element of the wireless core network can be identified with a CSN-PDF, the second network element of the wireless core network can be identified with a Home Agent (HA), the access network element can be identified with the WAC (ASN-GW), and the other element of the wireless core network employed for internally relaying the identifying parameter can be identified with a Authentication-Authorisation-Accounting/ Authentication-Authorisation-Accounting proxy (AAA/AAA proxy) module.

As already stated above, in a further embodiment of the method in accordance with the present invention said service is an IP multimedia subsystem (IMS) service.

Since WiMAX as well as IMS are fully IP based, in a further embodiment of the method in accordance with the present invention said registration message is a standardized Mobile IP (MIP) registration message.

In yet another embodiment of the method in accordance with the present invention, the identifying parameter is an IP address of a QoS managing entity, i.e. the SFA, in the access network element (WAC). In this way, the QoS managing entity of the WAC can be addressed directly by means of its IP address.

In a further embodiment of the method in accordance with the present invention said registration message is sent in connection with a mobility event of the user equipments. In other words: each time the user equipments (end terminal) experiences a mobility update, i.e. changes its WAC attachment, a new registration message is sent which includes the at least one identifying parameter, as detailed above.

In another embodiment of the method in accordance with the present invention said parameter is included in a Vendor / Organisation Specific Extension in accordance with RFC 3115 which foresees said extensions in Mobile IP registration messages.

Further advantages and characteristics of the present invention may be gathered from the following description of preferred embodiments given by way of example only with reference to the enclosed drawings. Features mentioned above as well as below may be used in accordance with the present invention either individually or in conjunction. The described embodiments are not to be regarded as an exhaustive enumeration but rather as examples with respect to the basic concept underlying the present invention.

In particular is should be noted that despite of the WiMAX-specific terminology used, the present invention is not limited to WiMAX networks and may equally be employed in connection with other wireless communication networks, e.g. the above-mentioned 3GPP LTE/SAE networks.

### Brief description of the drawings

- Fig. 1: is a schematic block diagram of a wireless communication network in accordance with the present invention;
- Fig. 2: is part of a first registration message used for identifying a network entity in a first embodiment of the method in accordance with the present invention;
- Fig. 3: is part of a second registration message used for identifying a network entity in a second embodiment of the method in accordance with the present invention; and
- Fig. 4: is a flow chart of an embodiment of the method in accordance with the present invention.

### Detailed description of the drawings

By means of example only and without limitation, embodiments of the present invention will now be described with reference to a wireless communication network devised in the form of a WiMAX network.

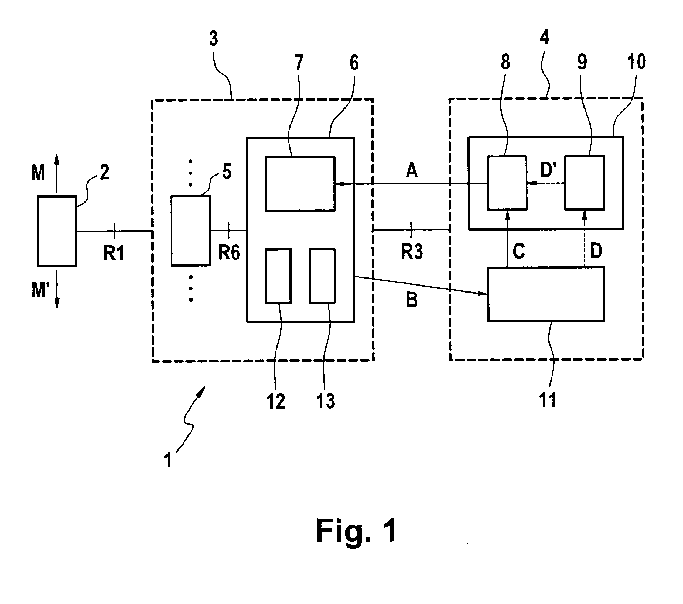

Fig. 1 is a schematic block diagram of a WiMAX network 1 in accordance with an embodiment of the present invention. The WiMAX network 1 of Fig. 1 generally corresponds to the Network Working Group (NWG) Network Reference Model (NRM) and generally comprises a (mobile) subscriber station (end terminal, user equipment) 2, an Access Service Network (ASN) 3, and a Connectivity Service Network (CSN) 4. Throughout the present document, ASN 3 is also referred to as (WiMAX) access network, and CSN 4 is also referred to as (WiMAX / IMS) core network.

ASN 3 further comprises at least one base station 5 and an ASN Gateway (ASN-GW) 6, also referred to as Wireless Access Controller (WAC). WAC 6 further comprises a Service Flow Activation (SFA) module 7.

Within CSN 4, the WiMAX network 1 of Fig. 1 further comprises a Policy Decision Function (PDF) 8 and an Authentication-Authorisation-Accounting (AAA) module 9. In the embodiment shown, PDF 8 and AAA/AAA proxy 9 can be included in a common physical entity (housing) 10. Furthermore, CSN 4 comprises a Mobile IP (MIP) Home Agent (HA) 11.

User equipment 2 and ASN 3 are connected by means of a connection marked R1, wherein R1 refers to a corresponding reference point of the NRM. Likewise, ASN 3 and CSN 4 are connected by means of a connection marked R3, and base station 5 and WAC 6 within ASN 3 are connected by means of a connection marked R6.

The above-described network 1 is based on standard WiMAX architecture. However, in the context of the shown embodiment in accordance with the present invention WAC 6 further comprises means / modules 12, 13, a respective function of which will become apparent later.

During operation of the WiMAX network 1 of Fig. 1, user equipment 2 is mobile as indicated by means of arrows M, M', such that it may leave / enter a coverage area (not shown) of ASN 3, i.e. base station 5 and WAC 6, to which said user equipment 2 is attached / registered. In order to ensure a required Quality-of-Service (QoS) to user equipment 2 a network initiated Quality-of-Service (QoS) request, e.g. an IP Multimedia Subsystem (IMS) request originating at the CSN 4, including corresponding QoS requirements is pushed from PDF 8 to SFA 7 in WAC 6. This indicated in Fig. 1 by means of arrow A. Said QoS requirements comprise QoS parameters which are used to differentiate telecommunication services based on measurable parameters evaluated or controlled via network monitoring, e.g. a required bit rate.

In order to continuously locate user equipment 2 in terms of a corresponding WAC 6 / SFA 7, upon each mobility event of user equipment 2, i.e. whenever the latter connects to a new base station / WAC, a special form of MIP registration message is sent from said WAC, e.g. WAC 6, to Home Agent 11, as indicated by means of arrow B in Fig. 1. In the context of the present invention, said special MIP registration messages comprise an extension including at least one parameter indicating an identifier of SFA 7, i.e. that particular entity in the WAC to which the QoS requirements are to be sent.

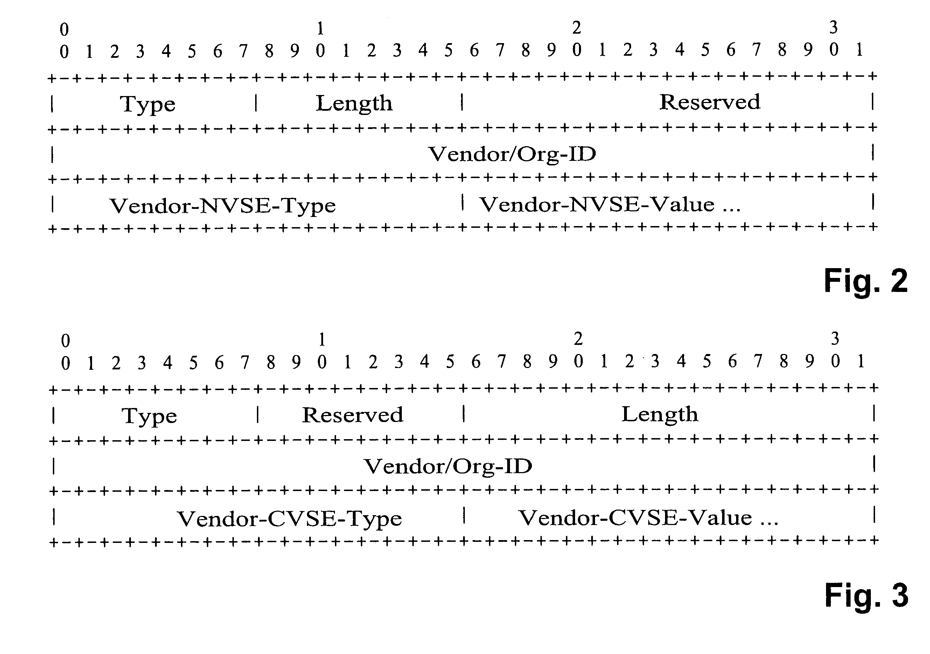

Specific formats of said MIP registration message extensions will be described below with reference to appended Figs. 2 and 3. Home agent 11 receives the MIP registration message (arrow B) and relays or forwards at least said extension and / or said parameter to PDF 8, either directly (solid arrow C in Fig. 1) or indirectly via AAA/AAA proxy 9 (dotted arrows D, D' in Fig. 1).

In this way, PDF 8 "knows" to which SFA / WAC QoS requirements initiated, for instance, in connection with IMS requests are to be sent. Note that no additional interfaces besides the existing ones according to the NRM have to be defined between ASN-GW (WAC) and CSN-PDF for messages with user equipment mobility updates in the context of the present invention. Please note also that the above described inventive approach generally does not rely on a functional architecture wherein the CSN 4 has a PDF 8, in contrast to, for instance, legacy IP CSN. Since signalling of the SFA / WAC identifying parameter occurs internally within CSN 4, the present approach enables to reuse existing functionality as provided, e.g., in TISPAN-based networks. In this context, PDF 8 in Fig. 1 would have to be replaced by the corresponding legacy functionality.

In other words, the proposed solution is convergent at CSN level with fixed WiMAX architecture.

Fig. 2 is a first embodiment of an extension in the MIP registration message as used in an embodiment of the present invention. The message extension of Fig. 2 corresponds to a first of Mobile IP Vendor / Organisation Specific Extensions as specified in document RFC 3115 (http:llrfc.net/rfc31 1 5.txt). Thus, a basic idea underlying the present invention is to manage terminal location for QoS management by adding a vendor specific information element / extension to the MIP registration messages (cf. arrow B in Fig. 1). In an embodiment of the present invention the added MIP vendor specific information element corresponds to an IP address of the SFA entity 7 in the WAC 6, which manages network initiated QoS requests (cf. arrow A in Fig. 1).

Since Mobile IP Vendor / Organisation Specific Extensions as such are known to a person skilled in the art, the message extensions depicted in Figs. 2 and 3 will not be discussed in great detail in the present document.

Fig. 2 is a Normal Vendor / Organisation Specific Extension (NVSE). Within the NVSE, the field "Vendor-NVSE-value..." is reserved for a particular type of Vendor-NVSE extension, the administration of which is done by the vendor of the network equipment in question. In the present embodiment in accordance with the present invention the Vendor-NVSE-value field includes the WAC-SFA IP address. Furthermore, the field "Vendor-NVSE-type" in Fig. 2 indicates a particular type of vendor-NVSE-extension. The administration of the Vendor-NVSE-types, too, is done by the vendor. In the context of the present invention the Vendor-NVSE-type field may be assigned a particular value, e.g. "X", in order to indicate that the present extension is to be used for the purpose of terminal location and is to be relayed to CSN-PDF accordingly.

Fig. 3 shows a Critical Vendor / Organisation Specific Extension (CVSE) according to cited document RFC 3115. Like the NVSE of Fig. 2, the CVSE also has a vendor type field and a vendor value field, which can be used for terminal location in the context of the present invention, as previously described.

As known to a person skilled in the art, the basic difference between the critical and normal extensions lies in the fact that in the case of a critical extension being encountered but not recognized a message comprising the extension must be silently discarded, whereas in the case of a normal extension being encountered but not recognized only the extension should be ignored while the rest of the corresponding message data must still be processed.

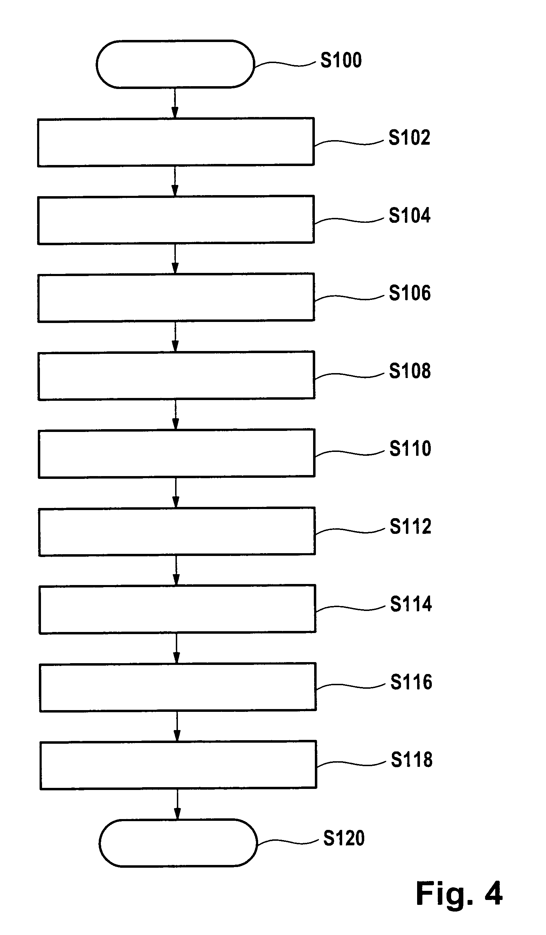

Fig. 4 is a flow chart illustrating an embodiment of the method in accordance with the present invention.

The method starts in step S100. In subsequent step S102 a mobility event of user equipment 2 (Fig. 1) takes place, i.e. user equipment 2 moves into an area of coverage by a new base station 5 / ASN-GW 6.

Accordingly, in subsequent step S104 a corresponding Mobile IP registration request is issued by user equipment 2 for transmission to Home Agent 11 (Fig. 1) via ASN 3 (Fig. 1) serving as Foreign Agent.

In step S106, said Mobile IP registration request is received by receiving means 12 in WAC 6 (Fig. 1).

Note that steps S104 and S106 are optional; in step S102 a mobility event of user equipment 2 may directly trigger a Mobile IP registration request inside ASN 3.

As previously described with reference to Figs. 2, 3, said parameter comprised in the Mobile IP registration request preferably is included into an equally standardised Mobile IP Vendor / Organisation Specific extension as detailed in RFC 3115 (step S108).

The Mobile IP registration request is then forwarded to Home Agent 11 in step S110, as indicated by means of arrow B in Fig. 1 It is passed on to including means 13 for including in said (standardised) Mobile IP registration request message at least one parameter indicating an identifier of SFA 7 in WAC 6 (Fig. 1).

Home Agent 11 receives the Mobile IP registration message and relays it to CSN-PDF 8 in step S112 in accordance with an entry in the vendor type field, as previously described with reference to Figs. 2 and 3. Relaying to the PDF 8 in step S112 can occur either directly as indicated by means of arrow C in Fig. 1, or indirectly via AAA/AAA proxy 9, as indicated by means of arrows D, D' in Fig. 1.

In subsequent step S114 a network initiated QoS request is issued, for instance an IMS-PDF request. Owing to the received terminal location information, said request is directed to the corresponding SFA entity 7 in WAC 6 managing network initiated QoS requests for the user equipment 2 in question (arrow A in Fig. 1; step S116).

Finally, in step S118 the ASN 3 communicates whether or not the required resources are available and can be allocated for that particular service.

The method terminates with step S120.

In this way, the proposed solution does not require definition of new interfaces between ASN-GW (WAC) and CSN-PDF for location messages in order to manage QoS. At the same time, compatibility with legacy wireless/WiMAX networks is ensured.

## Claims

1. A method of handling Quality-of-Service (QoS) requirements in a wireless communication network (1), in particular a WiMAX network, comprising sending QoS requirements (A) from a first element (8) of a wireless core network (4) to an element (6) of a wireless access network (3) involved in resource allocation to a user equipment (2) requiring a service with said QoS requirements, further comprising:
- sending a registration message (B) from the wireless access network element (6) to a second element (11) of the wireless core network (4) for registrating the user equipment (2);
- including in said registration message (B) at least one parameter indicating an identifier of an entity (7) in the wireless access network element (6) to which the QoS requirements (A) are to be sent.

2. The method of claim 1, further comprising forwarding said parameter from the second element (11) of the wireless core network (4) to the first element (8) of the wireless core network (4).

3. The method of claim 1 **characterised in that** said service is an IP Multimedia Subsystem (IMS) related service.

4. The method of claim 1, **characterised in that** said registration message (B) is a standardised Mobile IP (MIP) registration message.

5. The method of claim 1, **characterised in that** said parameter is an IP address of said entity (7) in the wireless access network element (6).

6. The method of claim 1, further comprising sending said registration message (B) in connection with a mobility event (M, M') of the user equipment (2).

7. The method of claim 1, further comprising the step of including said parameter in a Vendor / Organisation Specific Extension of the registration message (B) in accordance with RFC 3115.

8. Access network element (6) for use in a wireless access network (3) and adapted to function in resource allocation to a user equipment (2) requiring a service with a specific Quality-of-Service, QoS, comprising:
- means for receiving corresponding QoS requirements from a first element (8) of a wireless core network (4);
- means for sending a registration message (B) to a second element (11) of the wireless core network (4) for registrating the user equipment (2);
- means for including in said registration message (B) at least one parameter indicating an identifier of an entity (7) in the access network element (6) to which the QoS requirements (A) are to be sent.

9. Wireless communication network (1), in particular WiMAX network, comprising:
- a wireless access network (3) having the access network element (6) of claim 8, and
- a wireless core network (4) having a first network element (8) for sending QoS requirements (A) to said element (6) of the wireless access network (3) and a second network element (11) for receiving a registration message for registrating the user equipment (2) from said access network element (6) of the wireless access network (3), wherein the first network element (8) is adapted for sending said QoS requirements (A) to the entity (7) specified by said parameter.

10. Computer program product for use in handling Quality-of-Service, QoS, requirements in a wireless network (1), in particular a WiMAX network, comprising program code sequences operable to:
- send QoS requirements (A) from a first element (8) of a wireless core network (4) to an element (6) of a wireless access network (3) involved in resource allocation to a user equipment (2) requiring a service with said QoS requirements (A);
- send a registration message (B) from the wireless access network element (6) to a second element (11) of the wireless core network (4) for registrating the user equipment (2);
- including in said registration message (B) at least one parameter indicating an identifier of an entity (7) in the wireless access network element (6) to which the QoS requirements (A) are to be sent;
when installed and executed on said network elements (6, 8, 11) of the wireless network (1).
